# EUROPEAN PATENT SPECIFICATION

(11) **EP 4 342 563 B1**
(45) Date of publication and mention of the grant of the patent: **24.06.2026**
(21) Application number: 22196490.1
(22) Date of filing: 20.09.2022
(51) Int. Cl.: B01D 46/24, B01D 46/64

(54) **GAS FILTER SYSTEM**
GASFILTERSYSTEM
SYSTÈME DE FILTRATION DE GAZ

(43) Date of publication of application: 27.03.2024
(73) Proprietor: MANN+HUMMEL GmbH, 71636 Ludwigsburg (DE)
(72) Inventor: NEEF, Pascal, 78647 Trossingen (DE); WITTMERS, Christoph, 74321 Bietigheim-Bissingen (DE); WEBER, Andreas, 71691 Freiberg (DE); STARK, Dennis, 69256 Mauer (DE); RIEGER, Mario, 71638 Ludwigsburg (DE); HANSELMANN, Markus, 74348 Lauffen (DE); PEKNY, Peter, 95339 Neuenmarkt (DE); HALLBAUER, Eva, 95502 Himmelkron (DE); SCHMID, Daniel, 74343 Sachsenheim (DE); GERLACH, Steffen, 71154 Nufringen (DE); KUPFER, Friedrich, 84163 Marklkofen (DE); HETTKAMP, Philipp, 71711 Steinheim (DE); GRAD, Johannes, 94436 Simbach (DE); PEREIRA MADEIRA, Pedro Miguel, 74321 Bietigheim-Bissingen (DE); WEISS, Dieter, 95482 Gefrees (DE)
(74) Representative: Mann + Hummel Intellectual Property

(56) References cited:
- WO-A1-02/49738
- CN-U- 216 778 264
- DE-A1- 102018 215 603
- US-A1- 2017 266 598

## Description

### Technical field

The present invention refers to a gas filter system comprising
- an outer filter element having a first filter medium arranged between a first end cap and a second end cap; and
- an inner filter element having a second filter medium arranged between a third end cap and a fourth end cap;
the first filter medium being arrangeable to surround the second filter medium.

### Background

Such a filter system is known from DE 10 2018 215 603 A1 or US 5,415,677 A.

In some applications, it is required to filter a gas flow with two filter elements. Typically, the gas flows through a first filter element and then, the prefiltered gas flows through a second filter element. The filter elements can be arranged in a common housing. This kind of filter systems is for instance used to filter combustion air for large combustion engines, such as for trucks, construction vehicles or the like. Another application is the filtration of air for fuel cells.

DE 10 2018 215 603 A1 discloses a gas filter system with a first filter element which surrounds a second filter element. At a first axial end, open end caps of the two filter elements are associated with an outlet for clean air. At a second axial end, the first (outer) filter element has a open end cap and the second (inner) filter element has a closed end cap. The closed end cap of the inner filter element is arranged to close the opening in the end cap of the outer filter element at the second axial end.

The filter described in US 5,415,677 A comprises a primary and a secondary air filter element. At a rear end, the primary and the secondary air filter element are each closed by an end cap. At a front end, open end caps are provided at the primary and at the secondary filter elements. Annular gaskets are disposed at the open end caps in order to seal the primary and secondary filter element against a canister, in which the filter elements are arranged.

US 2017/266598 A1 discloses an air cleaner assembly, a main filter element, a safety element, combinations and methods for servicing an air cleaner assembly. The air cleaner assembly includes an air cleaner housing and a main filter element. The air cleaner housing includes a safety liner that supports the main filter element, and can be configured to help reduce the tendency of the main filter element to rotate during use of the air cleaner assembly. A safety element having two open ends, for use with such an assembly is described.

It is an object of the invention to provide a gas filter system with improved sealing between two filter elements, which are adapted for joint use.

This is achieved by a gas filter system according to claim 1 and use of filter elements according to claim 12. Advantageous embodiments are given in the subclaims and the description.

### Disclosure of the invention

In accordance with the invention, a gas filter system is provided. The gas filter system comprises
- an outer filter element having a first filter medium arranged between a first end cap and a second end cap; and
- an inner filter element having a second filter medium arranged between a third end cap and a fourth end cap.

The first, third and fourth end caps are open. The first, third and fourth end caps generally have a central opening.

The first filter medium is arrangeable to surround the second filter medium. The filter media may be hollow-cylindrical or conical, preferably with a circular or oval cross section. The filter media each surround a longitudinal axis. In particular, the filter media may be arranged concentric to the common longitudinal axis. Indications of directions such as radial or axial refer to the longitudinal axis. In principle, the first and third end caps are associated with a first axial end; the second and fourth end caps are associated with a second axial end.

During use of the gas filter system, a gas flow is typically first directed through the first filter medium of the outer filter element and then through the second filter medium of the inner filter element.

According to the invention, when the outer filter element is arranged around the inner filter element for use of the gas filter system, the outer filter element is sealed against the inner filter element between the second end cap and the fourth end cap, preferably in the radial direction. By sealing of the second and fourth end caps against each other, an intermediate space between the first and second filter media is sealed at the second end. Therefore, gas to be filtered must flow through the two filter media consecutively.

The fourth end cap of the inner filter element has a (second) sealing section for sealing abutment against the outer filter element, preferably in the radial direction. Additionally, the second sealing section may provide axial sealing. The second sealing section may be an integral part of the fourth end cap. Preferably, the fourth end cap - with the second sealing section - is a monolithic foam part.

In general, sealing sections described within the context of this invention are softer than the counter-part against which they shall seal. In particular, a respective sealing section can be made from polyurethane, preferably polyurethane foam. The respecttive counter-part can be made from rigid plastic.

The outer filter element has a support tube. The support tube stiffens the outer filter element. The support tube can be partially embedded in the first and/or second end cap. The support tube can be made of rigid plastic.

According to the invention, the support tube has a radially inward facing end face, which end face closes the outer filter element at the second end cap. Thus, the support tube is used in a dual function as a stiffening means and as a closing means. By providing the closed end face, manufacturing of the second end cap can be facilitated, as less material is required. In particular, the second end cap can be made of polyurethane, preferably polyurethane foam, which might be directly molded to the first filter medium and preferably the support tube.

In a mounted state, the fourth end cap is sealed against the support tube. In particular, the second sealing section sealingly abuts the support tube. The support tube may have an annular sealing strip for sealing abutment of the second sealing section. This facilitates sealing of the outer and inner filter elements between the second and fourth end caps. Preferably, the sealing strip of the support tube has a radially inward facing sealing surface. Radial sealing tolerates slight axial displacement of the inner filter element relative to the outer filter element.

The outer filter element can have an axial protrusion at the second end cap, which protrusion protrudes into the inner filter element. The protrusion provides guidance between the filter elements, in particular during mounting. The protrusion typically protrudes beyond the fourth end cap of the inner filter element in the axial direction. The protrusion can be formed at the monolithic second end cap or at the end face of the support tube.

The first end cap of the outer filter element can have a first sealing section for sealing abutment against a housing, preferably in the axial direction. Alternatively or additionally, the first sealing section may provide radial sealing abutment against the housing.

The third end cap of the inner filter element can have a third sealing section for sealing abutment against a housing, preferably in the radial direction. Alternatively or additionally, the third sealing section may provide axial sealing abutment against the housing.

Preferably, the gas filter system further comprises a housing, in which the inner and outer filter elements are arrangeable. In a mounted state, the filter elements are arranged inside the housing. Typically, the housing comprises a first housing part associated with the first end and a second housing part associated with the second end. An inlet may be formed at the first or second housing part. An outlet is preferably formed at the first housing part. The outlet may be in fluid communication with a clean side inside the inner filter element.

Preferably, the housing has a dome, which protrudes into the protrusion. The dome can provide guidance during mounting and in particular additional support to outer filter element during use of the filter system.

The housing may have a central tube, which extends into the inner filter element at the third end cap in a mounted state of the filter system. The central tube provides guidance to the inner filter element and support to the second filter medium.

The central tube can be held at an axial collar of the housing. This is advantageous for manufacturing the filter housing. A snap fit may be provided between the collar and the central tube.

Preferably, the protrusion and the central tube overlap each other in the axial direction. Mutual guidance and support between the central tube and the outer filter element can be achieved in this way. This can also facilitate mounting of the filter system. In particular, the protrusion may engage into the central tube. In other words, the central tube can surround the protrusion radially outwardly.

It may further be provided, that the dome and the central tube overlap each other in the axial direction. Undesired movement of the filter elements during operation can be effectively reduced with this design. Upon heavy vibration, the central tube can bear against the dome via the protrusion, which is arranged between the central tube and the dome.

At least two of an inner wall of the housing, the second end cap, the fourth end cap, the protrusion, the central tube and the dome can have a projection-receiver arrangement which provides for defined installation in circumferential direction. For example, a radially inward directed projection on the housing wall could project into a recess on the outer circumference of the second end cap.

The first or the second filter medium, in particular the second filter medium of the inner filter element, can have gas-adsorbing properties and preferably contains activated carbon. Typical harmful gases are SO₂, NOₓ and NH₃.

The first or the second filter medium, in particular the first filter medium of the outer filter element, can be made with cellulose.

The first and/or the second filter medium may be pleated.

The invention also relates to the use of an outer filter element and/or an inner filter element in a gas filter system according to the invention, as described above. The gas filter system may be used for cathode air filtration of a fuel cell in an electric vehicle.

### Brief description of drawings

Other advantages and features of the invention will be appreciated from the following description of embodiments of the invention with reference to the figures of the drawing, which show significant details, and from the claims. The individual features, as described above or explained below, may each be implemented individually or implemented together in any useful combination in variants of the invention.
- Fig. 1: shows a gas filter system according to the invention, the gas filter system comprising an outer filter element, an inner filter element and a housing, in a schematic sectional view;
- Fig. 2: shows the outer filter element of the gas filter system of Fig. 1, in a schematic sectional view;
- Fig. 3: shows the inner filter element of the gas filter system of Fig. 1, in a schematic sectional view;
- Fig. 4: shows a first end of the filter system of Fig. 1 in an enlarged view;
- Fig. 5: shows a second end of the filter system of Fig. 1 in an enlarged view.

### Detailed description

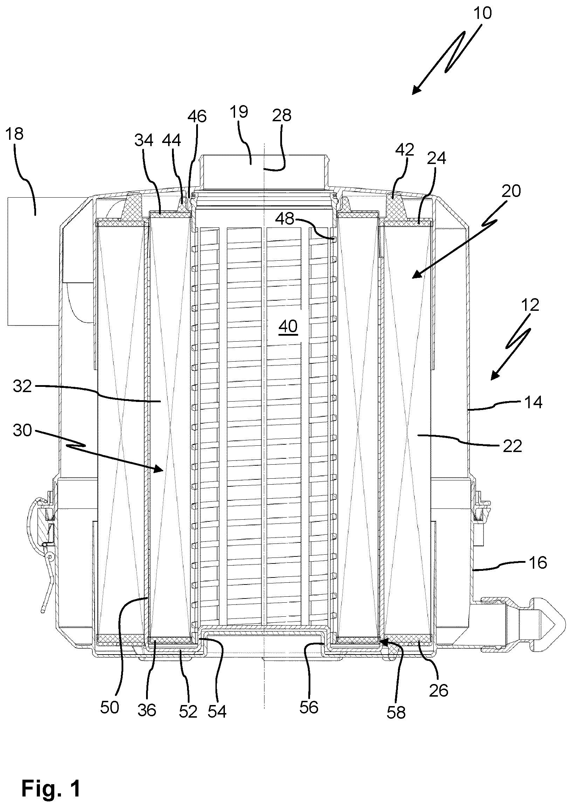

**Figure 1** shows a gas filter system **10.** The filter system 10 comprises a housing **12.** The housing has a first housing part **14** and a second housing part **16,** which are attachable to each other. An inlet **18** allows gas to enter the housing 12. Here the inlet is formed at the first housing part 14. An outlet **19** for filtered gas is also formed at the first housing part 14. The housing parts 14, 16 can be made from metal and/or rigid plastic.

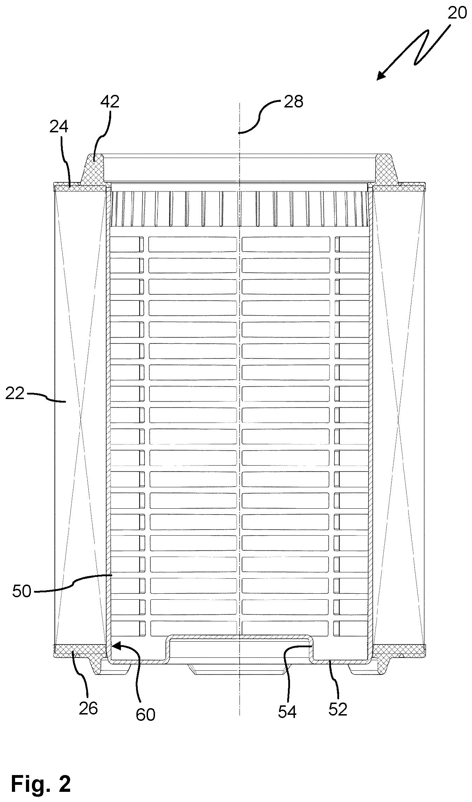

The filter system 10 further comprises an outer filter element **20,** see also **Figure 2****.** The outer filter element 20 comprises a first filter medium **22.** The first medium 22 is contained between a first end cap **24** and a second end cap **26.** The first filter medium 22 surrounds a longitudinal axis **28** in a ciruclar manner. The first filter medium 22 can be made from pleated cellulose paper.

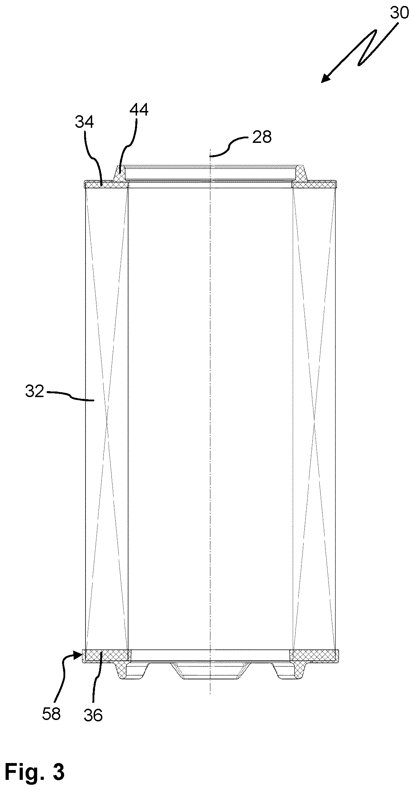

The filter system 10 further comprises an inner filter element **30,** see also **Figure 3****.** The inner filter element 30 comprises a second filter medium **32.** The second medium 32 is contained between a third end cap **34** and a fourth end cap **36.** The second filter medium 32 also surrounds the longitudinal axis 28 in a ciruclar manner. The second filter medium 32 can contain activated carbon in order to achieve gas-adsorbing properties.

The inner filter element 30 is arranged inside the outer filter element 20. Both filter elements 20, 30 are arranged inside the housing 12. Here, the first and second filter media 22, 32 are concentric to one another and to the longitudinal axis 28.

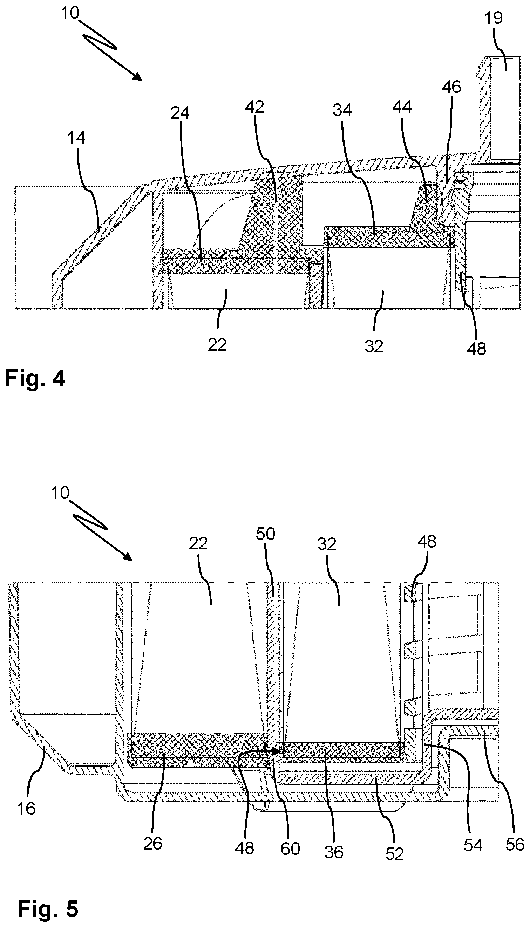

At a first end of the filter system 10, the first end cap 24 is arranged to surround the second filter medium 32 near the third end cap 34, see also **Figure 4****.** The first end cap 24 and the third end cap 34 each have a central opening, see also Figures 2 and 3, respectively. The outlet 19 is in fluid communication with a clean side **40** within the inner filter element 30, cf. Figure 1.

A first sealing section **42** axially protrudes form the first end cap 24. The first sealing section 42 sealingly abuts the first housing part 14 in the axial direction. Here, the first end cap 24 with the first sealing section 42 is integrally made from polyurethane foam.

A third sealing section **44** axially protrudes from the third end cap 34. The third sealing section 44 sealingly abuts the first housing part 14 in the radial direction. In particular, the third sealing section sealingly rests against a collar **46,** which axially protrudes into the housing 12 at the outlet 19. Here, the third end cap 34 and the third sealing section 44 are integrally made from polyurethane foam.

A central tube **48** of the housing 12 is held at the axial collar 46. The central tube 48 extends through the opening of the third end cap 34 towards the fourth end cap 36. The central tube 48 can be made from rigid plastic.

The outer filter element comprises a support tube **50,** see Figures 1, 2, 4 and also **Figure 5****.** The support tube extends from the first end cap 24 to the second end cap 26 on the inside of the first filter medium 22. The support tube 50 can be made from rigid plastic.

The support tube 50 may be partially embedded in the first and/or second end cap 24, 26. In particular, the second end cap 26 is in sealing contact with the support tube 50. Here, the second end cap 26 is made from polyurethane foam and can be molded to the first filter medium 22 and the support tube 50, in order to obtain a permanent connection.

At the second end, the support tube 50 has a closed end face **52.** The closed end face 52 spans a central area radially inside the first filter medium 22. In this way, the outer filter element 20 is closed at the second end cap 26 by the end face 52 of the support tube 50.

Radially within the second filter medium 32, the closed end face 52 of the support tube 50 forms a protrusion **54,** see Figures 1, 2 and 5. The protrusion 54 extends into the inner filter element 30 through a central opening in the fourth end cap 36.

The central tube 48 of the housing 12 and the protrusion 54 of the inner filter element 30 overlap each other along the longitudinal axis 28. The central tube 48 may surround the protrusion 54.

The housing 12 may have a dome **56.** Here, the dome 56 is formed at the second housing part 16, which can be a removable cover. The dome 56 extends towards the inside of the inner filter element 30. In particular, the dome 56 extends into the protrusion 54 of the outer filter element 30. More particularly, the dome 56, the protrusion 54 and the central tube 48 overlap each other along the longitudinal axis 28.

The fourth end cap 36 is sealed against the outer filter element 20, cf. Figures 1 and 5. In the depicted embodiment, a radial sealing is established. The fourth end cap 36, at its outer perimeter, has a second sealing section **58,** see also Figure 3. The fourth end cap 36 with the second sealing section 58 can be integrally made from polyurethane foam. In other words, the fourth end cap 36 with its sealing section 58 is a monolitic part.

The fourth sealing section 58 sealingly abuts an annular sealing strip **60** (see also Figure 2) of the support tube 50 in the radial direction. Here, the sealing strip 60 is formed on the same axial height as the second end cap 26. This allows the second end cap 26 and the fourth end cap 36 to seal against the sealing strip 60 from radially outside or inside, respectively.

### Reference Numbers

Gas filter system **10**
Housing **12**
First housing part **14**
Second housing part **16**
Inlet **18**
Outlet **19**
Outer filter element **20**
First filter medium **22**
First end cap **24**
Second end cap **26**
Longitudinal axis **28**
Inner filter element **30**
Second filter medium **32**
Third end cap **34**
Fourth end cap **36**

Clean side **40**
First sealing section **42**
Third sealing section **44**
Collar **46**
Central tube **48**
Support tube **50**
End face **52**
Protrusion **54**
Dome **56**
Second sealing section **58**
Sealing strip **60**

### Reference Numbers

Gas filter system **10**
Housing **12**
First housing part **14**
Second housing part **16**
Inlet **18**
Outlet **19**
Outer filter element **20**
First filter medium **22**
First end cap **24**
Second end cap **26**
Longitudinal axis **28**
Inner filter element **30**
Second filter medium **32**
Third end cap **34**
Fourth end cap **36**

Clean side **40**
First sealing section **42**
Third sealing section **44**
Collar **46**
Central tube **48**
Support tube **50**
End face **52**
Protrusion **54**
Dome **56**
Second sealing section **58**
Sealing strip **60**

## Claims

1. Gas filter system (10) comprising
- an outer filter element (20) having a first filter medium (22) arranged between a first end cap (24) and a second end cap (26); and
- an inner filter element (30) having a second filter medium (32) arranged between a third end cap (34) and a fourth end cap (36);
wherein the first, third and fourth end caps (24, 34, 36) are open;
wherein the first end cap (24) of the outer filter element (20) has a first sealing section (42) for sealing abutment against a housing (12),
wherein the outer filter element (20) is closed at the second end cap (26);
the first filter medium (22) being arrangeable to surround the second filter medium (32), such that the outer filter element (20) is sealed against the inner filter element (30) between the second end cap (26) and the fourth end cap (36),
wherein the outer filter element (20) has a support tube (50).
wherein the support tube (50) has a radially inward facing end face (52), which end face (52) closes the outer filter element (20) at the second end cap (26), and wherein the fourth end cap (36) has a second sealing section (58) for sealing abutment against the support tube (50) of the outer filter element (20).

2. Gas filter system (10) according any one of the preceding claims, wherein the outer filter element (20) has an axial protrusion (54) at the second end cap (26), which protrusion (54) protrudes into the inner filter element (30).

3. Gas filter system (10) according to any one of the preceding claims, wherein the first sealing section (42) is embodied for sealing abutment against the housing (12) in the axial direction.

4. Gas filter system (10) according to any one of the preceding claims, wherein the third end cap (34) has a third sealing section (44) for sealing abutment against a housing (12), preferably in the radial direction.

5. Gas filter system (10) according to one of the preceding claims further comprising a housing (12), in which the inner and outer filter elements (20, 30) are arrangeable.

6. Gas filter system (10) according to claims 2 and 5, wherein the housing (12) has a dome (56), which protrudes into the protrusion (54).

7. Gas filter system (10) according to claim 5 or 6, wherein the housing (12) has a central tube (48), which extends into the inner filter element (30) at the third end cap (34).

8. Gas filter system (10) according to claims 2 and 7, wherein the protrusion (54) and the central tube (48) overlap each other in the axial direction.

9. Gas filter system (10) according to claim 6 and according to claim 7 or 8, wherein the dome (56) and the central tube (48) overlap each other in the axial direction.

10. Gas filter system (10) according to any one of the preceding claims, wherein the first or the second filter medium (22, 32), in particular the second filter medium (32) of the inner filter element (30), has gas-adsorbing properties and preferably contains activated carbon.

11. Gas filter system (10) according to one of the preceding claims, wherein the first or the second filter medium (22, 32), in particular the first filter medium (22) of the outer filter element (20), is made with cellulose.

12. Use of an outer and/or an inner filter element (20, 30) in a gas filter system (10) according to one of the preceding claims.

## Patentansprüche

1. Gasfiltersystem (10) umfassend
- ein äußeres Filterelement (20) mit einem ersten Filtermedium (22), das zwischen einer ersten Endkappe (24) und einer zweiten Endkappe (26) angeordnet ist; und
- ein inneres Filterelement (30) mit einem zweiten Filtermedium (32), das zwischen einer dritten Endkappe (34) und einer vierten Endkappe (36) angeordnet ist;
wobei die erste, dritte und vierte Endkappe (24, 34, 36) offen sind;
wobei die erste Endkappe (24) des äußeren Filterelements (20) einen ersten Dichtungsabschnitt (42) zum dichtenden Anliegen an einem Gehäuse (12) hat, wobei das äußere Filterelement (20) an der zweiten Endkappe (26) geschlossen ist;
wobei das erste Filtermedium (22) so angeordnet werden kann, dass es das zweite Filtermedium (32) umgibt, so dass das äußere Filterelement (20) zwischen der zweiten Endkappe (26) und der vierten Endkappe (36) gegen das innere Filterelement (30) abgedichtet ist,
wobei das äußere Filterelement (20) ein Stützrohr (50) hat,
wobei das Stützrohr (50) eine radial nach innen gerichtete Stirnfläche (52) hat, welche Stirnfläche (52) das äußere Filterelement (20) an der zweiten Endkappe (26) verschließt, und wobei die vierte Endkappe (36) einen zweiten Dichtungsabschnitt (58) zum dichtenden Anliegen an dem Stützrohr (50) des äußeren Filterelements (20) hat.

2. Gasfiltersystem (10) nach einem der obigen Ansprüche, wobei das äußere Filterelement (20) an der zweiten Endkappe (26) einen axialen Vorsprung (54) hat, welcher axiale Vorsprung (54) in das innere Filterelement (30) hineinragt.

3. Gasfiltersystem (10) nach einem der obigen Ansprüche, wobei der erste Dichtungsabschnitt (42) zum dichtenden Anliegen an dem Gehäuse (12) in Achsrichtung ausgeführt ist.

4. Gasfiltersystem (10) nach einem der obigen Ansprüche, wobei die dritte Endkappe (34) einen dritten Dichtungsabschnitt (44) zum dichtenden Anliegen an einem Gehäuse (12), vorzugsweise in Radialrichtung, hat.

5. Gasfiltersystem (10) nach einem der obigen Ansprüche, ferner umfassend ein Gehäuse (12), in dem die inneren und äußeren Filterelemente (20, 30) anordenbar sind.

6. Gasfiltersystem (10) nach einem der Ansprüche 2 und 5, wobei das Gehäuse (12) eine Wölbung (56) hat, die in den Vorsprung (54) vorsteht.

7. Gasfiltersystem (10) nach Anspruch 5 oder 6, wobei das Gehäuse (12) ein Mittelrohr (48) hat, das sich in das innere Filterelement (30) an der dritten Endkappe (34) erstreckt.

8. Gasfiltersystem (10) nach den Ansprüchen 2 und 7, wobei der Vorsprung (54) und das Mittelrohr (48) einander in Axialrichtung überlappen.

9. Gasfiltersystem (10) nach Anspruch 6 und nach Anspruch 7 oder 8, wobei die Wölbung (56) und das Mittelrohr (48) einander in Axialrichtung überlappen.

10. Gasfiltersystem (10) nach einem der obigen Ansprüche, wobei das erste oder das zweite Filtermedium (22, 32), insbesondere das zweite Filtermedium (32) des inneren Filterelements (30), gasadsorbierende Eigenschaften hat und vorzugsweise Aktivkohle enthält.

11. Gasfiltersystem (10) nach einem der obigen Ansprüche, wobei das erste oder das zweite Filtermedium (22, 32), insbesondere das erste Filtermedium (22) des äußeren Filterelements (20), aus Zellulose besteht.

12. Verwendung eines äußeren und/oder eines inneren Filterelements (20, 30) in einem Gasfiltersystem (10) nach einem der obigen Ansprüche.

## Revendications

1. Système de filtration des gaz (10) comprenant
- un élément filtrant extérieur (20) ayant un premier milieu filtrant (22) disposé entre un premier bouchon d'extrémité (24) et un deuxième bouchon d'extrémité (26); et
- un élément filtrant intérieur (30) ayant un deuxième milieu filtrant (32) disposé entre un troisième bouchon d'extrémité (34) et un quatrième bouchon d'extrémité (36);
dans lequel les premier, troisième et quatrième bouchons d'extrémité (24, 34, 36) sont ouverts;
dans lequel le premier bouchon d'extrémité (24) de l'élément filtrant extérieur (20) a une première section d'étanchéité (42) pour assurer l'étanchéité par contact contre un boîtier (12),
dans lequel l'élément filtrant extérieur (20) est fermé au niveau du deuxième bouchon d'extrémité (26);
le premier milieu filtrant (22) pouvant être disposé pour entourer le deuxième milieu filtrant (32) de sorte que l'élément filtrant extérieur (20) soit étanche par rapport à l'élément filtrant intérieur (30) entre le deuxième bouchon d'extrémité (26) et le quatrième bouchon d'extrémité (36),
dans lequel l'élément filtrant extérieur (20) a un tube de support (50),
dans lequel le tube de support (50) a une face d'extrémité (52) tournée radialement vers l'intérieur, laquelle face d'extrémité (52) ferme l'élément filtrant extérieur (20) au niveau du deuxième bouchon d'extrémité (26), et dans lequel le quatrième bouchon d'extrémité (36) a une deuxième section d'étanchéité (58) conçue pour une butée d'étanchéité contre le tube de support (50) de l'élément filtrant extérieur (20).

2. Système de filtration des gaz (10) selon l'une quelconque des revendications précédentes, dans lequel l'élément filtrant extérieur (20) a une saillie axiale (54) au niveau du deuxième bouchon d'extrémité (26), laquelle saillie (54) fait saillie dans l'élément filtrant intérieur (30).

3. Système de filtration des gaz (10) selon l'une quelconque des revendications précédentes, dans lequel la première section d'étanchéité (42) est conçue pour une butée d'étanchéité contre le boîtier (12) en direction axiale.

4. Système de filtration des gaz (10) selon l'une quelconque des revendications précédentes, dans lequel le troisième bouchon d'extrémité (34) a une troisième section d'étanchéité (44) pour une butée d'étanchéité contre un boîtier (12), de préférence en direction radiale.

5. Système de filtration des gaz (10) selon l'une quelconque des revendications précédentes, comprenant en outre un boîtier (12), dans lequel les éléments filtrants intérieur et extérieur (20, 30) peuvent être disposés.

6. Système de filtration des gaz (10) selon les revendications 2 et 5, dans lequel le boîtier (12) a un dôme (56) faisant saillie dans la saillie (54).

7. Système de filtration des gaz (10) selon la revendication 5 ou 6, dans lequel le boîtier (12) a un tube central (48) s'étendant dans l'élément filtrant intérieur (30) au niveau du troisième bouchon d'extrémité (34).

8. Système de filtration des gaz (10) selon les revendications 2 et 7, dans lequel la saillie (54) et le tube central (48) se chevauchent en direction axiale.

9. Système de filtration des gaz (10) selon la revendication 6 et selon la revendication 7 ou 8, dans lequel le dôme (56) et le tube central (48) se chevauchent en direction axiale.

10. Système de filtration des gaz (10) selon l'une quelconque des revendications précédentes, dans lequel le premier ou le deuxième milieu filtrant (22, 32), en particulier le deuxième milieu filtrant (32) de l'élément filtrant intérieur (30), a des propriétés d'adsorption des gaz et contient de préférence du charbon actif.

11. Système de filtration des gaz (10) selon l'une quelconque des revendications précédentes, dans lequel le premier ou le deuxième milieu filtrant (22, 32), en particulier le premier milieu filtrant (22) de l'élément filtrant extérieur (20), est fait de cellulose.

12. Utilisation d'un élément filtrant extérieur (20, 30) dans un système de filtration des gaz (10) selon l'une quelconque des revendications précédentes.
